(19) Europäisches Patentamt / European Patent Office / Office européen des brevets

(11) **EP 3 209 901 B1**

(12) **EUROPEAN PATENT SPECIFICATION**

(45) Date of publication and mention
of the grant of the patent:
**20.04.2022 Bulletin 2022/16**

(21) Application number: **15852561.8**

(22) Date of filing: **21.10.2015**

(51) International Patent Classification (IPC):
**F16H 7/12** (2006.01)   **B60K 25/02** (2006.01)
**F02B 67/06** (2006.01)

(52) Cooperative Patent Classification (CPC):
**F16H 7/12; F16H 7/1209; F16H 7/1218;**
F16H 2007/0806; F16H 2007/0808;
F16H 2007/0865; F16H 2007/0874;
F16H 2007/0897

(86) International application number:
**PCT/CA2015/051067**

(87) International publication number:
**WO 2016/061685 (28.04.2016 Gazette 2016/17)**

(54) **ENDLESS DRIVE ARRANGEMENT AND IMPROVED TWO-ARMED TENSIONING SYSTEM FOR SAME**

ENDLOSANTRIEBSVORRICHTUNG UND VERBESSERTES ZWEIARMIGES SPANNSYSTEM DAFÜR

AGENCEMENT D'ENTRAÎNEMENT SANS FIN ET SON SYSTÈME DE TENSION AMÉLIORÉ À DEUX BRAS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2014   US 201462066719 P
06.02.2015   US 201562113302 P
01.04.2015   US 201562141514 P
10.04.2015   US 201562145993 P**

(43) Date of publication of application:
**30.08.2017 Bulletin 2017/35**

(73) Proprietor: **Litens Automotive Partnership
Woodbridge, Ontario L4L 5T7 (CA)**

(72) Inventors:
• **RYELAND, Geoffrey W.**
**North York, Ontario M3M 0A3 (CA)**
• **FAREWELL, Ron**
**Mississauga, Ontario L5L 1K1 (CA)**
• **BOYES, Andrew M.**
**Aurora, Ontario L4G 3J6 (CA)**
• **NEUDORF, Thelma**
**Etobicoke, Ontario M9V 5G9 (CA)**
• **DESOUZA-COELHO, Jason R.**
**Markham, Ontario L3S 3P3 (CA)**
• **ANTCHAK, John**
**Aurora, Ontario L4G 2L8 (CA)**

(74) Representative: **Grünecker Patent- und
Rechtsanwälte
PartG mbB
Leopoldstraße 4
80802 München (DE)**

(56) References cited:
WO-A1-2004/059192       WO-A1-2014/100894
DE-A1- 19 849 659        DE-U1-202008 002 279
US-A- 2 954 726          US-A1- 2003 109 342
US-A1- 2004 043 854      US-A1- 2009 298 631
US-B2- 7 901 310

• None

**Description**

CROSS-REFERENCE TO RELATED APPLICATIONS

FIELD

This disclosure relates generally to the art of endless drive arrangements and more particularly to systems for vehicular front engine accessory drive arrangements that employ a motor/generator unit or other secondary motive unit in addition to an engine and a two-armed tensioner.

BACKGROUND

Vehicular engines typically employ a front engine accessory drive to transfer power to one or more accessories, such as an alternator, an air conditioner compressor, a water pump and various other accessories. Some vehicles are hybrids and employ both an internal combustion engine, along with an electric drive. There are many possible configurations of such vehicles. For example, in some configurations, the electric motor is used to assist the engine in driving the vehicle (i.e. the electric motor is used to temporarily boost the amount of power being sent to the driven wheels of the vehicle). In some configurations, the electric motor is used to drive the driven wheels of the vehicle by itself and only after the battery is exhausted to a sufficient level does the engine turn on to take over the function of driving the vehicle.

While hybrid vehicles are advantageous in terms of improved fuel economy, their operation can result in higher stresses and different stresses on certain components such as the belt from the front engine accessory drive, which can lead to a reduction in the operating life of these components. It would be advantageous to provide improved operating life for components of the front engine accessory drive in a hybrid vehicle.

WO 2004/059192 A1 discloses a tensioner which is mounted in a system comprising an MGU and an engine shaft. In said document, the tensioner has arms which are provided with stops interact with an appendage. The angular travel of each tensioner arm is limited in operation by the interaction of the respective projection with the appendage.

Further relevant prior art is described in US 2004/043854 A1, DE 198 49 659 A1, WO 2014/100894 A1, US 2003/109342 A1 and US 2 954 726 A.

SUMMARY

In particular it is provided an endless drive arrangement having the features defined in claim 1. Further preferred embodiments are defined in the dependent claims. In an aspect, a tensioner is provided for tensioning a belt and includes first and second tensioner arms having first and second pulleys respectively. The first and second pulleys are configured for engagement with first and second belt spans, and are biased in first and second free arm directions respectively. A second tensioner arm stop is positioned to limit the movement of the second tensioner arm in a direction opposite the second free arm direction. The second tensioner arm stop is positioned such that, in use, the second pulley is engaged with the endless drive member while the second tensioner arm is engaged with the second tensioner arm stop throughout a first selected range of operating conditions.

In another aspect, an endless drive arrangement is provided, and includes a crankshaft, a secondary drive device, an endless drive member connecting the crankshaft and the secondary drive device, and a tensioner. The tensioner includes a first tensioner arm that has a first tensioner pulley rotatably mounted thereto. The first tensioner pulley is engaged with a first span of the endless drive member on a first side of the secondary drive device. The first tensioner arm is pivotable about a first tensioner arm pivot axis. The tensioner further includes a second tensioner arm that has a second tensioner pulley rotatably mounted thereto. The second tensioner pulley is engaged with a second span of the endless drive member on a second side of the secondary drive device. The second tensioner arm is pivotable about a second tensioner arm pivot axis. The tensioner further includes a tensioner biasing member that is positioned to apply a tensioner biasing force to bias the first and second tensioner arms in respective first and second free arm directions, and a second tensioner arm stop that is positioned to limit the movement of the second tensioner arm in a direction opposite the second free arm direction. The second tensioner arm stop is positioned such that, in use, the second tensioner pulley is engaged with the endless drive member while the second tensioner arm is engaged with the second stop throughout a selected range of operating conditions. For this tensioner:

$$\frac{TR}{TL} > \frac{hF2}{hF1}$$

where

TR = TR2 - TR3,
TL = TR4 - TR5,
TR2 = the moment arm relative to the second tensioner arm pivot axis of a force T2 exerted on the second tensioner pulley by a first portion of the second span of the endless drive member,
TR3 = the moment arm relative to the second tensioner arm pivot axis of a force T3 exerted on the second tensioner pulley by a second portion of the second span of the endless drive member,
TR4 = the moment arm relative to the first tensioner arm pivot axis of a force T4 exerted on the first tensioner pulley by a first portion of the first span of the endless drive member,

TR5 = the moment arm relative to the second tensioner arm pivot axis of a force T5 exerted on the first tensioner pulley by a second portion of the first span of the endless drive member,

hF1 = the moment arm relative to the first tensioner arm pivot axis of a force FL exerted on the first tensioner arm by the tensioner biasing member, and

hF2 = the moment arm relative to the second tensioner arm pivot axis of the force FL exerted on the second tensioner arm by the tensioner biasing member.

In another aspect, an endless drive arrangement is provided and includes a crankshaft, a secondary drive device, an endless drive member connecting the crankshaft and the secondary drive device and a tensioner. The tensioner includes a base and a first tensioner arm that has a first tensioner pulley rotatably mounted thereto. The first tensioner pulley is configured for engagement with a first span of the endless drive member. The first tensioner arm is pivotally mounted to the base and is biased in a first free arm direction. The tensioner further includes a second tensioner arm that has a second tensioner pulley rotatably mounted thereto. The second tensioner pulley is configured for engagement with a second span of the endless drive member. The second tensioner arm is pivotally mounted to the base and a second load stop position and is biased in a second free arm direction. When tension in the endless drive member is between zero and a yield tension for the endless drive member, the first and second tensioner pulleys are movable along a first path and a second path respectively. The first path and the second path are entirely spaced from one another.

In another aspect, a tensioner is provided for tensioning an endless drive member. The tensioner includes a base, and a first tensioner arm that has a first tensioner pulley rotatably mounted thereto, wherein the first tensioner pulley is configured for engagement with a first span of the endless drive member. The first tensioner arm is pivotally mounted to the base for movement about a first tensioner arm pivot axis. The tensioner further includes a second tensioner arm that has a second tensioner pulley rotatably mounted thereto. The second tensioner pulley is configured for engagement with a second span of the endless drive member. The second tensioner arm is pivotally mounted to the base for movement about a second tensioner arm pivot axis. The tensioner further includes a biasing member that applies first and second biasing forces on the first and second tensioner arms in first and second free arm directions respectively. The tensioner further includes a first damping structure configured to dampen movement of the first tensioner arm, a second damping structure configured to dampen movement of the second tensioner arm and a third damping structure configured to dampen relative movement between the first and second tensioner arms. In another aspect, an endless drive arrangement is provided that includes the tensioner described above.

In another aspect, a tensioner is provided for tensioning an endless drive member. The tensioner includes a base, a first tensioner arm, and a second tensioner arm. The base is generally C-shaped and is configured to mount to a housing of an accessory that is drivable by the endless drive member. The first tensioner arm has a first tensioner pulley rotatably mounted thereto. The first tensioner pulley is configured for engagement with a first span of the endless drive member. The first tensioner arm is pivotally mounted to the base and is biased for movement in a first free arm direction. The second tensioner arm has a second tensioner pulley rotatably mounted thereto. The second tensioner pulley is configured for engagement with a second span of the endless drive member. The second tensioner arm is pivotally mounted to the base for movement along a second path and is biased for movement in a second free arm direction.

## BRIEF DESCRIPTION OF THE DRAWINGS

The foregoing and other aspects of the invention will be better appreciated with reference to the attached drawings, wherein:

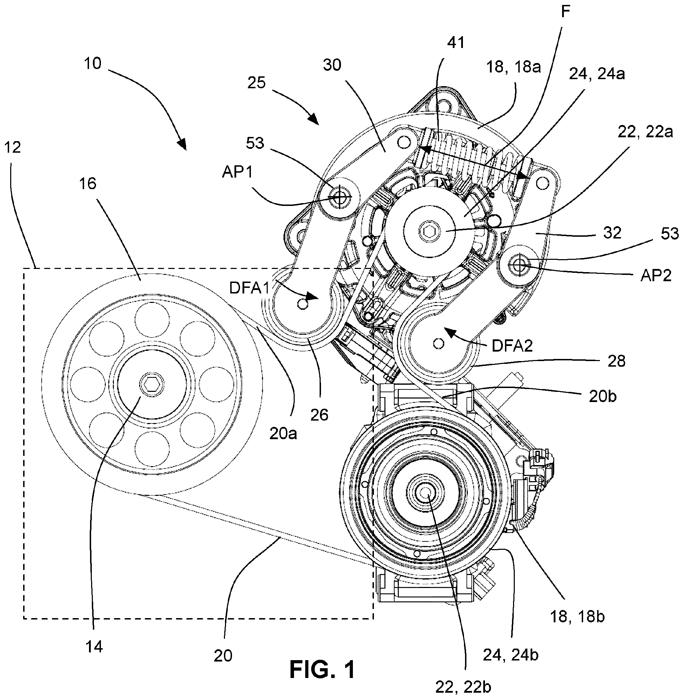

Figures 1-10 depict inventive aspects of the disclosure.

## DETAILED DESCRIPTION OF EXAMPLE EMBODIMENTS

Figure 1 shows an endless drive arrangement 10 for an engine, schematically represented by a dashed-line rectangle and shown at 12. In embodiments wherein the engine 12 is mounted in a vehicle, the endless drive arrangement 10 may be a front engine accessory drive. The engine 12 includes a crankshaft 14 that has a crankshaft pulley 16 mounted thereon. The crankshaft pulley 16 is drivable by the crankshaft 14 of the engine 12 and itself drives one or more vehicle accessories 18 via an endless drive member 20, such as a belt. For convenience the endless drive member 20 will be referred to as a belt 20, however it will be understood that it could be any other type of endless drive member. The accessories 18 may include a motor-generator unit (MGU) 18a, an air conditioning compressor 18b, a water pump (not shown), a power steering pump (not shown) and/or any other suitable accessory.

In Figure 1, two accessories 18 are shown, however there could be more or fewer accessories. Each of the driven accessories has a drive shaft 22 and a pulley 24. The MGU 18a has an MGU drive shaft 22a and an MGU pulley 24a.

As can be seen in Figure 1, the belt 20 is engaged with the crankshaft pulley 16 and the MGU pulley shown at 24a (and the other accessory pulleys 24). Under normal operating conditions the endless drive arrangement is operable in a first mode in which the endless drive arrangement 10 may be driven by the engine 12, and in turn drives the pulleys 24 of the accessories 18. In the first mode, the tension in the first belt span 20a is lower than the tension in the second belt span 20b. The MGU 18a may be operable to as an alternator in the first mode, in order to charge the vehicle's battery (not shown).

The MGU 18a is also operable as a motor, wherein it drives the MGU pulley 24a, which in turn drives the belt 20. During such events where the MGU 18a is operated as a motor, the endless drive arrangement may be considered to be operable in a second mode, in which the tension in the second belt span 20b is lower than the tension in the first belt span 20a. This may be during a 'boost' event when the engine is driving the wheels of the vehicle, but additional power is desired to supply further power to the wheels indirectly by transferring power to the engine's crankshaft 14 via the belt 20. Another situation in which the MGU 18a is operated as a motor include a BAS (Belt-Alternator Start) event, in which the MGU 18a drives the belt 20 in order to cause rotation of the crankshaft 14, and thereby start the engine 12. Yet another situation in which the MGU 18a is operated as a motor is an ISAF (Idle/Stop Accessory Function) event, when the MGU 18a is used to drive the belt 20 in order to drive one or more accessories when the engine is off (e.g. in some hybrid vehicles where the engine is turned off automatically when the vehicle is at a stoplight or is otherwise stopped briefly).

In the present disclosure, the span 20a of the belt 20 may be referred to at the belt span 20a, and the span 20b of the belt 20 may be referred to as the belt span 20b.

It will be noted that the MGU 18a is but one example of a secondary drive device that can be used as a motor to drive the belt 20 for any of the purposes ascribed above to the MGU 18a. In an alternative example, the accessory 18a may be a typical alternator and a separate electric motor may be provided adjacent to the alternator (either upstream or downstream on the belt 20 from the alternator) to driving the belt 20 when it is desired to boost acceleration of the vehicle, in BAS operation, and/or in ISAF operation.

A tensioner 25 for the endless drive arrangement 10 is shown in Figure 1. The tensioner 25 includes a first tensioner pulley 26 that is configured for engagement with the first span 20a and a second tensioner pulley 28 that is configured for engagement with the second belt span 20b. The first tensioner pulley 26 is rotatably mounted on a first tensioner arm 30. The second tensioner pulley 28 is rotatably mounted on a second tensioner arm 32 (Figure 1). The first and second tensioner arms 30 and 32 are each pivotable about respective first and second tensioner arm pivot axes AP1 and AP2. More specifically, the first and second tensioner arms 30 and 32 are mounted to a base 48 that mounts fixedly to the housing of the MGU 18a or any other suitable stationary member.

The first and second tensioner pulleys 26 and 28 are biased in first and second free arm directions (shown in Figure 1 at DFA1 and DFA2 respectively). More specifically, a tensioner biasing member 41 may be positioned to apply a tensioner biasing force F on the first and second tensioner arms 30 and 32 in the respective first and second free arm directions DFA1 and DFA2.

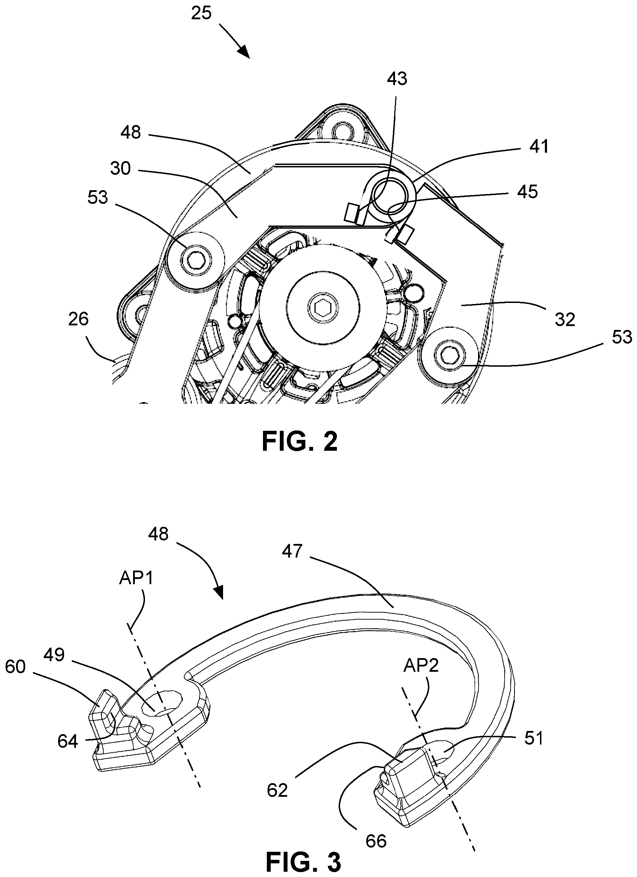

The tensioner biasing member 41 may have any suitable structure, such as, for example, a linear helical compression spring that extends between the first and second tensioner arms 30 and 32. In an alternative embodiment, shown in Figure 2, the tensioner biasing member 41 may, for example, be a torsion spring that abuts first and second drive surfaces 43 and 45 on the first and second arms 30 and 32 and urges the arms 30 and 32 in directions to drive the first and second tensioner pulleys 26 (shown partially in Figure 2) and 28 (not shown in Figure 2) into the belt 20.

In the embodiments shown in Figures 1 and 2, the first tensioner pulley 26 is on a first side of the first tensioner arm pivot axis AP1, and the tensioner biasing member 41 is positioned to apply the tensioner biasing force F on a second side of the first tensioner arm pivot axis AP1, and the second tensioner pulley 28 is on a first side of the second tensioner arm pivot axis AP2, and the tensioner biasing member 41 is positioned to apply the tensioner biasing force F on a second side of the second tensioner arm pivot axis AP2, wherein the second sides of the first and second tensioner arms 30 and 32 are opposite the first sides of the first and second tensioner arms 30 and 32.

Several features of the tensioner 25 may be advantageous and are described further below.

### C-shaped base

In an embodiment, the base 48 for the tensioner 25 may be generally C-shaped as shown in Figure 3. In the embodiment shown in Figure 3, the base 48 has a base body 47, and first and second mounting apertures 49 and 51 proximate the circumferential ends of the base body 47, wherein the first and second apertures 49 and 51 are configured for mounting the base 28 to the housing of the MGU 18a or another suitable member. The mounting apertures 49 and 51 may also be used to receive pins (shown at 53 in Figures 1 and 2) for supporting the pivoting movement of the first and second tensioner arms 30 and 32 and may thus define the first and second pivot axes AP1 and AP2. Furthermore, the opening (shown at 53 that is defined by the C-shape of the base 48, is free of any obstructions in an axial direction. As a result, the tensioner 25 is configured to facilitate dissipation of heat from the MGU 18a.

### Presence of first and second tensioner arm stops

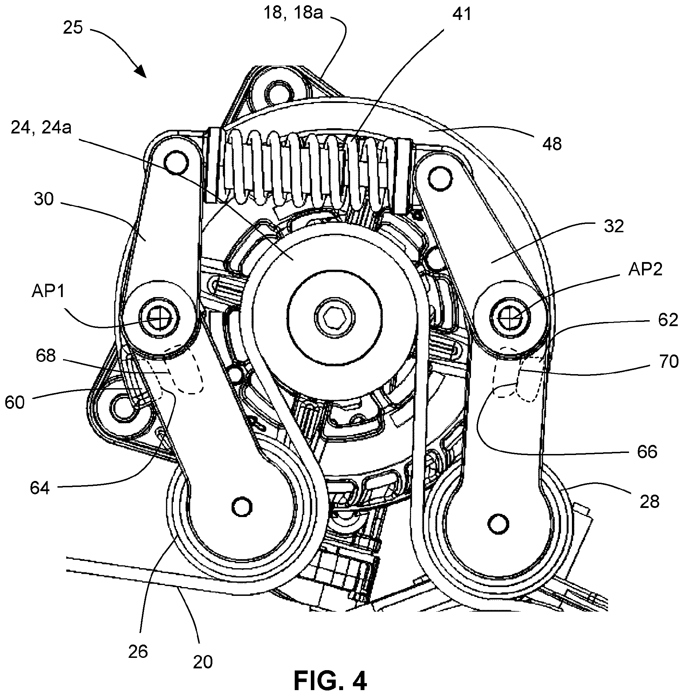

In the embodiment shown in Figure 4, the tensioner 25 includes a first tensioner arm stop 60 that is positioned to limit the movement of the first tensioner arm 30 in a direction opposite the first free arm direction. The direction opposite the first free arm direction may be referred to as a first load stop direction. The tensioner 25 includes a second tensioner arm stop 62 that is positioned to limit the movement of the second tensioner arm 32 in a direction opposite the second free arm direction (i.e. a second load stop direction). The tensioner 25 may be configured such that the second tensioner arm stop 62 is positioned such that, in use, the second tensioner pulley 28 is engaged with the endless drive member 20 while the second tensioner arm 32 is engaged with the second tensioner arm stop 62 throughout a first selected range of operating conditions. The first selected range of operating conditions may be the conditions in which when the endless drive arrangement 10 is operated in the first mode (i.e. wherein the crankshaft 14 is used to drive the belt 20). The tensioner arm stops 60 and 62 have first and second base-mounted stop surfaces 64 and 66 respectively that are engageable with first and second arm-mounted stop surfaces 68 and 70 on the first and second tensioner arms 30 and 32 respectively.

Optionally, during use, the first tensioner pulley 26 is engaged with the endless drive member 20 while the first tensioner arm 30 is engaged with the first tensioner arm stop 60 throughout a second selected range of operating conditions that is different from the first range of operating conditions. For example, the second selected range of operating conditions may include conditions wherein the endless drive arrangement 10 is operated in the second mode (i.e. wherein the MGU 18a is used to drive the belt 20).

As a further option, during use, the first and second tensioner arm stops 60 and 62 are positioned such that, in use, the first and second tensioner pulleys 26 and 28 are engaged with the endless drive member 20 while the first and second tensioner arms 30 and 32 are disengaged from the first and second tensioner arm stops 60 and 62 throughout a third selected range of operating conditions that is different from the first and second ranges of operating conditions. This third range of operating conditions may include conditions in which the endless drive arrangement is transitioning between the first and second modes.

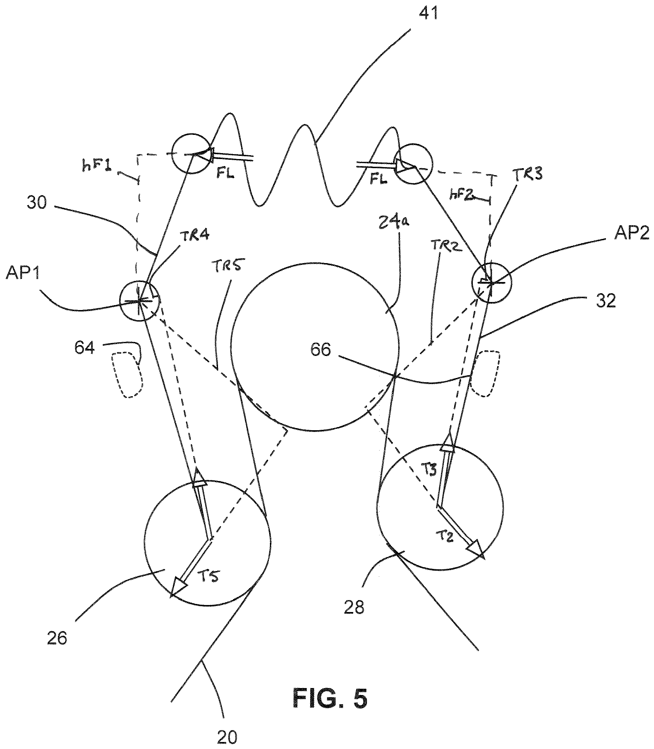

The relationships that exist in at least some embodiments in order for the second tensioner pulley 28 to be engaged with the endless drive member 20 while the second tensioner arm 32 is engaged with the second tensioner arm stop 62 throughout a first selected range of operating conditions are described below in relation to Figure 5, which is a schematic representation of the tensioner 25 to show the forces and moments acting thereon.

It has been found that it is advantageous for the following condition to be met:

$$\frac{TR}{TL} > \frac{hF2}{hF1}$$

where

TR = TR2 - TR3,
TL = TR4 - TR5,
TR2 = the moment arm relative to the second tensioner arm pivot axis of a force T2 exerted on the second tensioner pulley by a first portion of the second span of the endless drive member,
TR3 = the moment arm relative to the second tensioner arm pivot axis of a force T3 exerted on the second tensioner pulley by a second portion of the second span of the endless drive member,
TR4 = the moment arm relative to the first tensioner arm pivot axis of a force T4 exerted on the first tensioner pulley by a first portion of the first span of the endless drive member,
TR5 = the moment arm relative to the second tensioner arm pivot axis of a force T5 exerted on the first tensioner pulley by a second portion of the first span of the endless drive member,
hF1 = the moment arm relative to the first tensioner arm pivot axis of a force FL exerted on the first tensioner arm by the tensioner biasing member, and
hF2 = the moment arm relative to the second tensioner arm pivot axis of the force FL exerted on the second tensioner arm by the tensioner biasing member.

By meeting the above noted relationship, the tensioner 25 remains stable against the second base-mounted stop surface 66 when the endless drive arrangement is operating in the first mode. Meeting this relationship entails some preload against the second base-mounted stop surface 66 that exists due to the geometry of the tensioner 25. This preload permits the second arm 32 to remain against the stop surface 66 even during torsional vibrations that are inherent with the operation of internal combustion engines such as engine 12. It has been found that the spikes in the belt tension that occur during operation in the second mode (when the MGU 18a is being driven as a motor) were lower than they are for a tensioner of the prior art that does rest against one stop surface or another during the first and second modes of operation.

Another advantage maintaining the second arm 32 against the stop surface 66 when the endless drive arrangement 10 is in the first mode is that any damping structures that may be provided on the tensioner 25 in association with the second arm 32 incur a reduced amount of wear. Additionally, the stop surface 66 on the base (and the corresponding surface 70 on the second arm 32) incur a reduced amount of wear as compared to a situation where there is repeated impact with a stop surface.

Overall, because the tensioner 25 moves less than a tensioner that is not abutted against a stop during operation of the engine, the operating life of the tensioner may be increased as compared to such a prior art tensioner.

### Three damping structures

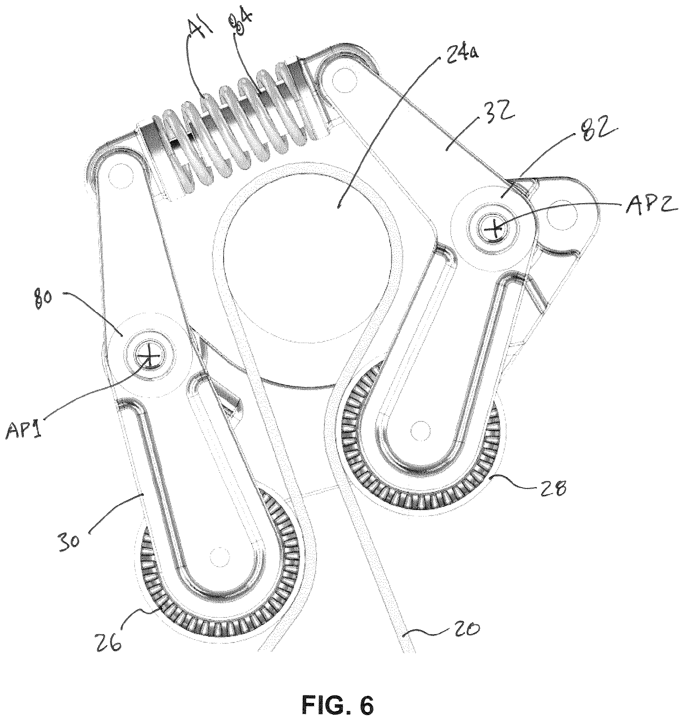

Reference is made to Figure 6, which shows three damping structures that are optionally included for the tensioner 25, including a first damping structure 80 configured to dampen movement of the first tensioner arm 30, a second damping structure 82 configured to dampen movement of the second tensioner arm 32, and a third damping structure 84 configured to dampen relative movement between the first and second tensioner arms 30 and 32.

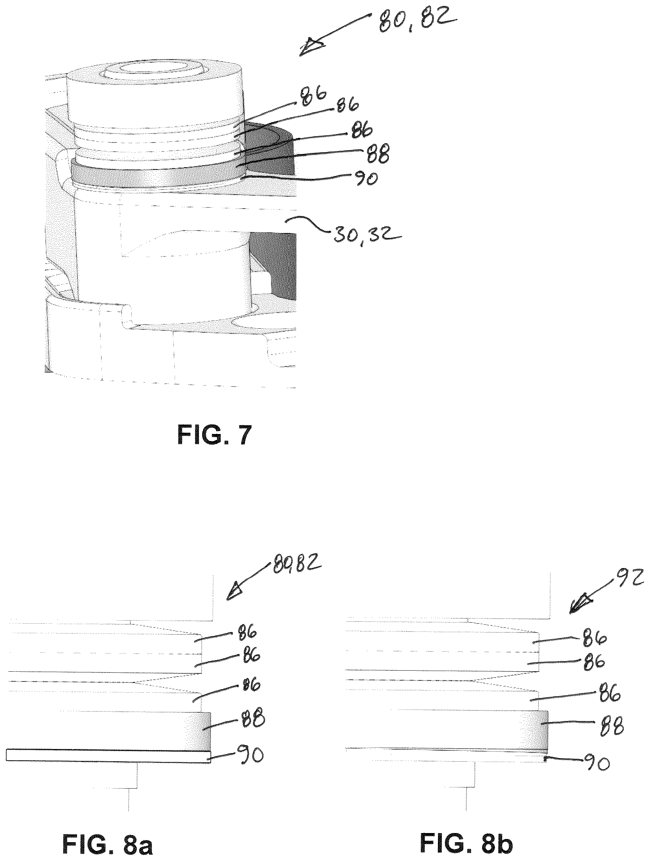

Referring to Figures 7 and 8a each damping structure 80 and 82 may be a rotary damping structure and may include one or more Belleville washers 86, that apply an axial force against a thrust bushing 88, which engages a frictional damping element 90, thereby resulting in a first or second damping force that resists movement of the first or second tensioner arm 30, as the case may be. It will be noted that such a first and second damping forces provided by the damping structures shown may be substantially independent of the first and second biasing forces.

Referring to Figure 8b, it is alternatively possible to provide a damping structure 92 that could be used instead of one or both of the damping structures 80 or 82. The damping structure 92 includes a circumferentially ramped thrust bushing that engages a corresponding circumferentially ramped frictional damping element 90. As a result, during pivoting in the load stop direction this damping structure 92 provides a first amount of damping force, but during pivoting in the free arm direction this damping structure 92 provides a second amount of damping force that is lower than the first damping force. Thus, for whichever of the arms 30 and 32 the damping structure 92 is provided on it provides a damping force that is dependent on a direction of rotation of the first and second tensioner arms respectively.

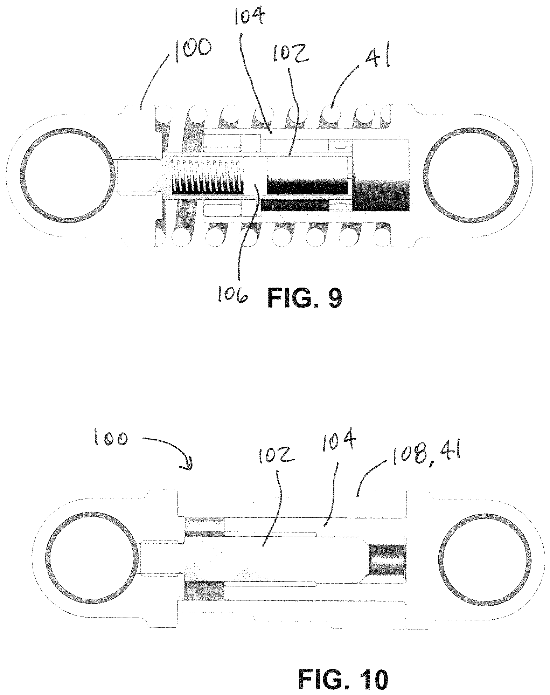

Examples of the third damping structure are shown in the sectional views in Figures 9 and 10. As shown in Figure 9, the biasing member 41 includes a helical compression spring that extends between the arms 30 and 32 and surrounds a strut 100 that includes a piston 102 that is movable in a cylinder 104. Hydraulic oil (or any other suitable incompressible fluid) is provided in the cylinder and passes through an orifice having a selected size in the piston 102. The third damping structure, which includes the piston with the orifice and the cylinder 104, inhibits movement of the piston 102 in the cylinder 104. A spring biased volume compensation member 106 (which itself is a piston) is provided to compensate for the change in effective volume that accompanies movement of the piston 102 in the cylinder 104.

In Figure 10, an alternative type of strut 100 is provided, in which little resistance to movement is provided by the strut piston and cylinder 104. Instead, the damping is provided by a closed-cell foam member 108 that is also the biasing member 41. This provides a structure that has few parts. The closed-cell foam member 108 has damping that takes place inherently during compression of the closed-cell foam member 108.

With both of the damping structures shown in Figures 9 and 10, the damping that is provided may be speed dependent. In other words, if the relative movement between the arms 30 and 32 is relatively slow, the damping force provided by the damping structure 84 may be relatively small. However, if the movement between the arms 30 and 32 is relatively fast, the damping force provided by the damping structure 84 may be relatively high. During torsional vibrations, the damping structure 84 may provide relatively high damping, thereby resisting relative movement between the arms 30 and 32. In the event that an isolator or similar device is provided, the isolator can assist in reducing the severity of torsional vibrations in the endless drive arrangement.

While hydraulic and closed-cell foam damping structures are shown in Figures 9 and 10, any other suitable type of damping structure can be used, such as pneumatic damping structure, a friction damping structure, or any other suitable type of damping structure.

### Providing a selected coefficient of static friction

The first damping structure 80 is provided with a selected coefficient of static friction that provides a first selected resistance to movement away from being stationary (e.g. a first selected resistance to movement away from the stop surface 64). Similarly the second damping structure is provided with a second coefficient of static friction associated therewith so as to provide a second selected resistance to movement away from being stationary (e.g. a first selected resistance to movement away from the stop surface 66). The second coefficient of static friction may be greater than about 0.3. The second coefficient of static friction may be selected so as to inhibit separation of the second arm 32 from the second stop surface 66 during torsional vibrations or other conditions. This assists the stability of the second arm 32. Furthermore, providing damping to inhibit relative movement between the two arms 30 and 32 assists in dampening drive resonance, which can occur naturally due to the inertia associated with each of the components being driven in the endless drive arrangement 10.

### Relationship between the first and second damping structures

In the tensioner 25, the damping torque provided by the first damping structure 80 may be higher than the damping torque provided by the second damping structure 82, particularly in embodiments in which the damping structures provide damping that is independent of the direction of rotation of the arms 30 and 32. As a result, the second arm 32 can pivot towards the belt 20 during a transition to the second mode of operation (when a fast transition is desirable) more quickly than the first arm 30 can pivot toward the belt 20 during a transition to the first mode of operation (when a slower transition is more acceptable). Optionally, the ratio of the damping torque to moment arm length for each of the first and second tensioner arms 30 and 32 is between about 0.02 Nm/mm (Newton metres per millmetre) and about 0.2 Nm/mm (Newton metres per millmetre). Optionally, the first damping torque is between about 2 Nm and about 15 Nm. The specific relationships between the damping torques can be determined by one skilled in the art after having the benefit of the present disclosure.

## Providing a tensioner using two pivot arms on a stationary base

It will be noted that, providing a tensioner such as tensioner 25 which has two arms 30 and 32 which pivot relative to the stationary base 48 facilitates the positioning of first and second pulleys 26 and 28 relatively far from the MGU pulley 24a. This can be advantageous in two-pulley systems in which there is only a crankshaft pulley 16 and an MGU pulley 24a (and the tensioner 25) that are engaged by the belt 20. In such systems, the amount of belt wrap that is possible is relatively lower than in typical orbital tensioners which incorporate a ring and one or more pulleys on one or more arcuate arms that orbits on the ring. In such orbital tensioners, the pulleys are typically positioned very close to the MGU pulley and as a result, the belt undergoes significant two-way bending in a short period of time as it travels from one tensioner pulley to the MGU pulley to the other tensioner pulley, which can damage the belt. By contrast, the longer arms of the tensioner 25 permit less severe bending on the belt 20, which can improve the operating life of the belt 20. Additionally, the long arms available with the tensioner 25 can result in large linear movements by the pulleys 26 and 28 from smaller angular movements, which can improve the wear life of certain components.

Additionally, orbital tensioners tend to have decoupling effect such that torques that are applied at the MGU pulley 24a will result in large swings of the orbital tensioner which in turn provide this decoupling (or isolating) effect. However, in some situations it may be desirable to use the MGU to provide torque smoothing. Thus, by providing the tensioner 25 which does not have large swings associated with it, a much reduced decoupling effect is observed. As a result, the MGU 18a can be used for torque smoothing.

While the description contained herein constitutes a plurality of embodiments of the present invention, it will be appreciated that the present invention is susceptible to further modification and change without departing from the fair meaning of the accompanying claims.

## Claims

1. An endless drive arrangement of an engine including a crankshaft pulley (16) driven by a crankshaft (14), a motor/generator unit (MGU) pulley (24a) , and an endless drive member (20) entrained about the crankshaft pulley (14) and the MGU pulley (24a), wherein the endless drive arrangement is operable in a first mode in which the crankshaft pulley (14) drives the endless drive member (20) and the MGU pulley (24a) does not drive the endless drive member (20) such that tension in a first span of the endless drive member (20) is lower than a second span of the endless drive member (20), and wherein the endless drive member (20) is operable in a second mode in which the MGU pulley (24a) drives the endless drive member (20) in isolation or in conjunction with the crankshaft pulley (16), wherein the endless drive arrangement further comprising a tensioner (25) comprising:

   a first tensioner arm (30) that is pivotable about a first arm pivot axis (AP1) and which has a first tensioner pulley (26) rotatably mounted thereto for rotation about a first tensioner pulley axis that is spaced from the first arm pivot axis (AP1), wherein the first tensioner pulley (30) is configured for engagement with the first span of the endless drive member (20);
   a second tensioner arm (32) that is pivotable about a second arm pivot axis (AP2), which is spaced apart from the first arm pivot axis (AP1), and which has a second tensioner pulley (28) rotatably mounted thereto for rotation about a second tensioner pulley axis that is spaced from the second arm pivot axis (AP2), wherein the second tensioner pulley (28) is configured for engagement with the second span of the endless drive member;
   a tensioner biasing member (41) that is positioned to bias the first and second tensioner arms (30, 32) in a first free arm direction and in a second free arm direction, respectively, wherein the first tensioner pulley (26) is disposed on a first side of the first tensioner arm pivot axis (AP1), and the tensioner biasing member (41) is positioned to apply the tensioner biasing force on a second side of the first tensioner arm pivot axis (AP1), and wherein the second tensioner pulley (28) is on a first side of the second tensioner arm pivot axis (AP2), and the tensioner biasing member (41) is positioned to apply the tensioner biasing force on a second side of the second tensioner arm pivot axis (AP2); wherein the endless drive arrangement is **char-**

**acterized by**

a second tensioner arm stop surface (66) that is positioned to limit the movement of the second tensioner arm (32) in a direction opposite the second free arm direction,
wherein a geometry of the tensioner (25) is such that the second tensioner arm (32) has a preload applied by at least the endless drive member (20) and the tensioner biasing member (41), wherein the preload urges the second tensioner arm into engagement with the second tensioner arm stop surface (66) such that, in use, the second tensioner pulley is engaged with the endless drive member (20) while the second tensioner arm is engaged with the second tensioner arm stop surface (66) in the first mode of operation.

2. An endless drive arrangement as claimed in claim 1, wherein the tensioner biasing member (41) is a compression spring.

3. An endless drive arrangement as claimed in claim 1, wherein the tensioner biasing member (41) is a torsion spring.

4. An endless drive arrangement as claimed in one of the preceding claims, further comprising a first tensioner arm stop surface (64) that is positioned to limit the movement of the first tensioner arm (30) in a direction opposite the first free arm direction, wherein the first tensioner arm stop surface (64) is positioned such that, in use, the first tensioner pulley (26) is engaged with the endless drive member (20) while the first tensioner arm (30) is engaged with the first tensioner arm stop surface (64) in the second mode of operation.

5. An endless drive arrangement as claimed in one of the preceding claims,

wherein the first tensioner pulley (26) is engaged with a first span of the endless drive member (20) on a first side of the motor/generator unit (MGU), wherein the second tensioner pulley (28) is engaged with a second span of the endless drive member (20) on a second side of the motor/generator unit (MGU);
wherein the second tensioner arm stop (62) is positioned such that, in use, the second tensioner pulley (28) is engaged with the endless drive member (20) while the second tensioner arm (32) is engaged with the second stop (62) throughout a selected range of operating conditions, and wherein

$$\frac{TR}{TL} > \frac{hF2}{hF1}$$

where

TR = TR2 - TR3,
TL = TR4 - TR5,
TR2 = the moment arm relative to the second tensioner arm pivot axis (AP2) of a force T2 exerted on the second tensioner pulley (28) by a first portion of the second span of the endless drive member (20),
TR3 = the moment arm relative to the second tensioner arm pivot axis (AP2) of a force T3 exerted on the second tensioner pulley (28) by a second portion of the second span of the endless drive member (20),
TR4 = the moment arm relative to the first tensioner arm pivot axis (AP1) of a force T4 exerted on the first tensioner pulley (26) by a first portion of the first span of the endless drive member (20),
TR5 = the moment arm relative to the first tensioner arm pivot axis (AP1) of a force T5 exerted on the first tensioner pulley (26) by a second portion of the first span of the endless drive member (20),
hF1 = the moment arm relative to the first tensioner arm pivot axis (AP1) of a force FL exerted on the first tensioner arm (30) by the tensioner biasing member (41), and
hF2 = the moment arm relative to the second tensioner arm pivot axis (AP2) of the force FL exerted on the second tensioner arm (32) by the tensioner biasing member (41).

6. An endless drive arrangement as claimed in claim 5, wherein the motor/generator unit (MGU) is configured to apply a secondary drive unit torque to the endless drive member (20) in a direction that is opposed to a crankshaft torque that is applied to the endless drive member.

7. An endless drive arrangement as claimed in one of claims 5 or 6, wherein the first tensioner pulley (26) is on a first side of the first tensioner arm pivot axis (AP1), and the tensioner biasing member (41) is positioned to apply the tensioner biasing force on a second side of the first tensioner arm pivot axis (AP1), and wherein the second tensioner pulley (28) is on a first side of the second tensioner arm pivot axis (AP2), and the tensioner biasing member (41) is positioned to apply the tensioner biasing force on a second side of the second tensioner arm pivot axis (AP2).

8. The endless drive arrangement as claimed in one of claims 5 to 7, wherein the tensioner (25), including

a base (48);

wherein the first tensioner arm (20) is pivotally mounted to the base (48) and is biased in a first free arm direction; and

wherein the second tensioner arm (32) is pivotally mounted to the base (48) and a second load stop position and is biased in a second free arm direction,

wherein when tension in the endless drive member (20) is between zero and a yield tension for the endless drive member (20), the first and second tensioner pulleys (26, 28) are movable along a first path and a second path respectively, wherein the first path and the second path are entirely spaced from one another.

9. The endless drive arrangement as claimed in any one of the preceding claims 1 to 4 further comprising:

a base (48), wherein the base is generally C-shaped and is configured to mount to a housing of an accessory that is drivable by the endless drive member (20);

wherein the first tensioner arm (30) is pivotally mounted to the base (48) and is biased for movement in the first free arm direction; and

wherein the second tensioner arm (32) is pivotally mounted to the base (48) for movement along a second path and is biased for movement in the second free arm direction.

**Patentansprüche**

1. Endlosantriebsanordnung eines Motors mit einer Kurbelwellenriemenscheibe (16), die von einer Kurbelwelle (14) angetrieben wird, einer Motor/Generator-Einheit (MGU) Riemenscheibe (24a) und einem Endlosantriebselement (20), das um die Kurbelwellenriemenscheibe (14) und die MGU-Riemenscheibe (24a) mitgenommen wird,

wobei die Endlosantriebsanordnung in einem ersten Modus betreibbar ist, in dem die Kurbelwellenriemenscheibe (14) das Endlosantriebselement (20) antreibt und die MGU-Riemenscheibe (24a) das Endlosantriebselement (20) nicht antreibt, so dass die Spannung in einem ersten Spann des Endlosantriebselements (20) geringer ist als in einem zweiten Spann des Endlosantriebselements (20), und wobei das Endlosantriebselement (20) in einem zweiten Modus betreibbar ist, in dem die MGU-Riemenscheibe (24a) das Endlosantriebselement (20) isoliert oder in Verbindung mit der Kurbelwellenriemenscheibe (16) antreibt, wobei die Endlosantriebsanordnung ferner einen Spanner (25) umfasst, der Folgendes umfasst

einen ersten Spannerarm (30), der um eine erste Armschwenkachse (AP1) schwenkbar ist und an dem eine erste Spannrolle (26) drehbar angebracht ist, um sich um eine erste Spannrollenachse zu drehen, die von der ersten Armschwenkachse (AP1) beabstandet ist, wobei die erste Spannrolle (30) für einen Eingriff mit dem ersten Spann des Endlosantriebselements (20) konfiguriert ist;

einen zweiten Spannerarm (32), der um eine zweite Armschwenkachse (AP2) schwenkbar ist, die von der ersten Armschwenkachse (AP1) beabstandet ist, und der eine zweite Spannrolle (28) aufweist, die drehbar daran für eine Drehung um eine zweite Spannrollenachse montiert ist, die von der zweiten Armschwenkachse (AP2) beabstandet ist, wobei die zweite Spannrolle (28) für einen Eingriff mit dem zweiten Spann des Endlosantriebselements konfiguriert ist;

ein Spannervorspannelement (41), das so positioniert ist, dass es den ersten und den zweiten Spannerarm (30, 32) in einer ersten Freiarmrichtung bzw. in einer zweiten Freiarmrichtung vorspannt, wobei die erste Spannrolle (26) auf einer ersten Seite der Schwenkachse (AP1) des ersten Spannerarms angeordnet ist, und das Spanner-Vorspannelement (41) so positioniert ist, dass es die Spanner-Vorspannkraft auf eine zweite Seite der ersten Spannerarmschwenkachse (AP1) ausübt, und wobei die zweite Spannrolle (28) auf einer ersten Seite der zweiten Spannerarmschwenkachse (AP2) angeordnet ist und das Spannervorspannelement (41) so positioniert ist, dass es die Spannervorspannkraft auf eine zweite Seite der zweiten Spannerarmschwenkachse (AP2) ausübt; wobei die Endlosantriebsanordnung **gekennzeichnet ist durch** eine zweite Spannerarm-Anschlagfläche (66), die so positioniert ist, dass sie die Bewegung des zweiten Spannerarms (32) in einer Richtung entgegengesetzt zur zweiten freien Armrichtung begrenzt,

wobei eine Geometrie des Spanners (25) derart ist, dass der zweite Spannerarm (32) eine Vorspannung aufweist, die durch mindestens das Endlosantriebselement (20) und das Spannervorspannelement (41) aufgebracht wird, wobei die Vorspannung den zweiten Spannerarm in Eingriff mit der zweiten Spannerarm-Anschlagfläche (66) drängt, so dass im Gebrauch die zweite Spannrolle mit dem Endlosantriebselement (20) in Eingriff ist, während der zweite Spannerarm mit der zweiten Spannerarm-Anschlagfläche (66) in der ersten Betriebsart in Eingriff ist.

2. Endlosantriebsanordnung nach Anspruch 1, wobei das Spannervorspannelement (41) eine Druckfeder ist.

3. Endlosantriebsanordnung nach Anspruch 1, bei der das Spannervorspannelement (41) eine Torsionsfeder ist.

4. Endlosantriebsanordnung nach einem der vorhergehenden Ansprüche, die ferner eine erste Spannerarm-Anschlagfläche (64) umfasst, die so positioniert ist, dass sie die Bewegung des ersten Spannerarms (30) in einer Richtung entgegengesetzt zur ersten freien Armrichtung begrenzt, wobei die erste Spannerarm-Anschlagfläche (64) so positioniert ist, dass im Gebrauch die erste Spannrolle (26) mit dem Endlosantriebselement (20) in Eingriff ist, während der erste Spannerarm (30) mit der ersten Spannerarm-Anschlagfläche (64) in der zweiten Betriebsart in Eingriff ist.

5. Endlosantriebsanordnung nach einem der vorhergehenden Ansprüche,

   wobei die erste Spannrolle (26) mit einem ersten Spann des Endlosantriebselements (20) auf einer ersten Seite der Motor/Generator-Einheit (MGU) in Eingriff ist, wobei die zweite Spannrolle (28) mit einem zweiten Spann des Endlosantriebselements (20) auf einer zweiten Seite der Motor/Generator-Einheit (MGU) in Eingriff ist;
   wobei der zweite Spannarmanschlag (62) so positioniert ist, dass im Gebrauch die zweite Spannrolle (28) mit dem Endlosantriebselement (20) in Eingriff ist, während der zweite Spannerarm (32) mit dem zweiten Anschlag (62) über einen ausgewählten Bereich von Betriebsbedingungen in Eingriff ist, und wobei

$$\frac{TR}{TL} > \frac{hF2}{hF1}$$

   wobei

   TR = TR2 - TR3,
   TL = TR4 - TR5,
   TR2 = der Momentarm relativ zur zweiten Spannerarmschwenkachse (AP2) einer Kraft T2, die auf die zweite Spannrolle (28) durch einen ersten Abschnitt des zweiten Spanns des Endlosantriebselements (20) ausgeübt wird,
   TR3 = der Momentarm relativ zur zweiten Spannerarmschwenkachse (AP2) einer Kraft T3, die auf die zweite Spannrolle (28) durch einen zweiten Abschnitt des zweiten Spanns des Endlosenantriebselements (20) ausgeübt wird,
   TR4 = der Momentarm relativ zur ersten Spannerarmschwenkachse (AP1) einer Kraft T4, die auf die erste Spannrolle (26) durch einen ersten Abschnitt des ersten Spanns des Endlosantriebselements (20) ausgeübt wird,
   TR5 = der Momentarm relativ zur ersten Spannerarmschwenkachse (AP1) einer Kraft T5, die auf die erste Spannrolle (26) durch einen zweiten Abschnitt des ersten Spannsdes Endlosantriebselements (20) ausgeübt wird,
   hF1 = der Momentarm relativ zur ersten Spannerarmschwenkachse (AP1) einer Kraft FL, die auf den ersten Spannerarm (30) durch das Spannervorspannelement (41) ausgeübt wird, und
   hF2 = der Momentarm relativ zur zweiten Spannerarmschwenkachse (AP2) der Kraft FL, die auf den zweiten Spannerarm (32) durch das Spannervorspannelement (41) ausgeübt wird.

6. Endlosantriebsanordnung nach Anspruch 5, wobei die Motor-/Generatoreinheit (MGU) so konfiguriert ist, dass sie ein Drehmoment der sekundären Antriebseinheit auf das Endlosantriebselement (20) in einer Richtung ausübt, die einem Kurbelwellendrehmoment entgegengesetzt ist, das auf das Endlosantriebselement ausgeübt wird.

7. Endlosantriebsanordnung nach einem der Ansprüche 5 oder 6, wobei sich die erste Spannrolle (26) auf einer ersten Seite der ersten Spannerarmschwenkachse (AP1) befindet und das Spannervorspannelement (41) so positioniert ist, dass es die Spannvorspannkraft auf eine zweite Seite der ersten Spannerarmschwenkachse (AP1) aufbringt, und wobei sich die zweite Spannrolle (28) auf einer ersten Seite der zweiten Spannerarmschwenkachse (AP2) befindet und das Spannervorspannungselement (41) so positioniert ist, dass es die Spannvorspannungskraft auf eine zweite Seite der zweiten Spannerarmschwenkachse (AP2) ausübt.

8. Endlosantriebsanordnung nach einem der Ansprüche 5 bis 7, wobei der Spanner (25) Folgendes umfasst

   eine Basis (48);
   wobei der erste Spannerarm (20) schwenkbar an der Basis (48) angebracht ist und in eine erste freie Armrichtung vorgespannt ist; und
   wobei der zweite Spannerarm (32) schwenkbar an der Basis (48) und einer zweiten Lastanschlagposition angebracht ist und in eine zweite Richtung des freien Arms vorgespannt ist, wobei, wenn die Spannung in dem Endlosantriebselement (20) zwischen Null und einer Streckspannung für das Endlosantriebselement (20) liegt, die erste und die zweite Spannrolle (26, 28) entlang eines ersten Pfades bzw. eines zweiten Pfades bewegbar sind, wobei der erste Pfad und der zweite Pfad vollständig voneinander beabstandet sind.

9. Endlosantriebsanordnung nach einem der vorhergehenden Ansprüche 1 bis 4, ferner umfassend:

eine Basis (48), wobei die Basis im Allgemeinen C-förmig ist und so konfiguriert ist, dass sie an einem Gehäuse eines Zubehörteils befestigt werden kann, das von dem Endlosantriebselement (20) angetrieben werden kann;
wobei der erste Spannerarm (30) schwenkbar an der Basis (48) angebracht ist und zur Bewegung in der ersten freien Armrichtung vorgespannt ist; und
wobei der zweite Spannerarm (32) schwenkbar an der Basis (48) für eine Bewegung entlang eines zweiten Pfades angebracht ist und für eine Bewegung in der zweiten freien Armrichtung vorgespannt ist.

## Revendications

1. Agencement d'entraînement sans fin d'un moteur incluant une poulie de vilebrequin (16) entraînée par un vilebrequin (14), une poulie (24a) d'unité moteur/générateur (MGU), et un élément d'entraînement sans fin (20) entraîné autour de la poulie de vilebrequin (14) et de la poulie MGU (24a), dans lequel l'agencement d'entraînement sans fin peut être utilisé dans un premier mode dans lequel la poulie de vilebrequin (14) entraîne l'élément d'entraînement sans fin (20) et la poulie MGU (24a) n'entraîne pas l'élément d'entraînement sans fin (20) de manière qu'une tension dans une première portée de l'élément d'entraînement sans fin (20) est inférieure à une seconde portée de l'élément d'entraînement sans fin (20), et dans lequel l'élément d'entraînement sans fin (20) peut être utilisé dans un second mode dans lequel la poulie MGU (24a) entraîne l'élément d'entraînement sans fin (20) de manière isolée de, ou en conjonction avec, la poulie de vilebrequin (16), dans lequel l'agencement d'entraînement sans fin comprenant en outre un tendeur (25) comprenant :

un premier bras tendeur (30) qui peut pivoter autour d'un premier axe de pivot de bras (AP1) et qui possède une première poulie de tendeur (26) montée de manière rotative sur celui-ci pour une rotation autour d'un premier axe de poulie de tendeur qui est espacé du premier axe de pivot de bras (AP1), dans lequel la première poulie de tendeur (30) est configurée pour l'engagement avec la première portée de l'élément d'entraînement sans fin (20) ;
un second bras tendeur (32) qui peut pivoter autour d'un second axe de pivot de bras (AP2), qui est espacé du premier axe de pivot de bras (AP1), et qui possède une seconde poulie de tendeur (28) montée de manière rotative sur celui-ci pour la rotation autour d'un second axe de poulie de tendeur qui est espacé du second axe de pivot de bras (AP2), dans lequel la seconde poulie de tendeur (28) est configurée pour l'engagement avec la seconde portée de l'élément d'entraînement sans fin ;
un élément de sollicitation de tendeur (41) qui est positionné pour solliciter le premier et le second bras tendeur (30, 32) dans un premier sens de bras libre et dans un second sens de bras libre, respectivement, dans lequel la première poulie de tendeur (26) est disposée sur un premier côté du premier axe de pivot de bras tendeur (AP1), et l'élément de sollicitation de tendeur (41) est positionné pour appliquer la force de sollicitation de tendeur sur un second côté du premier axe de pivot de bras tendeur (AP1), et dans lequel la seconde poulie de tendeur (28) se trouve sur un premier côté du second axe de pivot de bras tendeur (AP2), et l'élément de sollicitation de tendeur (41) est positionné pour appliquer la force de sollicitation de tendeur sur un second côté du second axe de pivot de bras tendeur (AP2) ; dans lequel l'agencement d'entraînement sans fin est **caractérisé par** une seconde surface de butée de bras tendeur (66) qui est positionnée pour limiter le mouvement du second bras tendeur (32) dans un sens opposé au second sens de bras libre,
dans lequel une géométrie du tendeur (25) est telle que le second bras tendeur (32) possède une précharge appliquée par au moins l'élément d'entraînement sans fin (20) et l'élément de sollicitation de tendeur (41), dans lequel la précharge pousse le second bras tendeur à l'engagement avec la seconde surface de butée de bras tendeur (66) de manière que, lors en cours d'utilisation, la seconde poulie de tendeur est engagée avec l'élément d'entraînement sans fin (20) pendant que le second bras tendeur est engagé avec la seconde surface de butée de bras tendeur (66) dans le premier mode de fonctionnement.

2. Agencement d'entraînement sans fin tel que revendiqué selon la revendication 1, dans lequel l'élément de sollicitation de tendeur (41) est un ressort de compression.

3. Agencement d'entraînement sans fin tel que revendiqué selon la revendication 1, dans lequel l'élément de sollicitation de tendeur (41) est un ressort à torsion.

**4.** Agencement d'entraînement sans fin tel que revendiqué selon l'une des revendications précédentes, comprenant en outre une première surface de butée de bras tendeur (64) qui est positionnée pour limiter le mouvement du premier bras tendeur (30) dans un sens opposé au premier sens de bras libre, dans lequel la première surface de butée de bras tendeur (64) est positionnée de manière que, lors de son utilisation, la première poulie de tendeur (26) est engagée avec l'élément d'entraînement sans fin (20) pendant que le premier bras tendeur (30) est engagé avec la première surface de butée de bras tendeur (64) dans le second mode de fonctionnement.

**5.** Agencement d'entraînement sans fin tel que revendiqué selon l'une des revendications précédentes,

dans lequel la première poulie de tendeur (26) est engagée avec une première portée de l'élément d'entraînement sans fin (20) sur un premier côté de l'unité moteur/générateur (MGU), dans lequel la seconde poulie de tendeur (28) est engagée avec une seconde portée de l'élément d'entraînement sans fin (20) sur un second côté de l'unité moteur/générateur (MGU) ; dans lequel la seconde butée de bras tendeur (62) est positionnée de manière que, durant le fonctionnement, la seconde poulie de tendeur (28) est engagée avec l'élément d'entraînement sans fin (20) pendant que le second bras tendeur (32) est engagé avec la seconde butée (62) à travers une plage sélectionnée d'états de fonctionnement, et dans lequel

$$\frac{TR}{TL} > \frac{hF2}{hF1}$$

où

TR = TR2 - TR3,
TL = TR4 - TR5,
TR2 = le bras de levier par rapport au second axe de pivot de bras tendeur (AP2) d'une force T2 exercée sur la seconde poulie de tendeur (28) par une première portion de la seconde portée de l'élément d'entraînement sans fin (20),
TR3 = le bras de levier par rapport au second axe de pivot de bras tendeur (AP2) d'une force T3 exercée sur la seconde poulie de tendeur (28) par une seconde portion de la seconde portée de l'élément d'entraînement sans fin (20),
TR4 = le bras de levier par rapport au premier axe de pivot de bras tendeur (AP1) d'une force T4 exercée sur la première poulie de tendeur (26) par une première portion de la première portée de l'élément d'entraînement sans fin (20),
TR5 = le bras de levier par rapport au premier axe de pivot de bras tendeur (AP1) d'une force T5 exercée sur la première poulie de tendeur (26) par une seconde portion de la première portée de l'élément d'entraînement sans fin (20),
hF1 = le bras de levier par rapport au premier axe de pivot de bras tendeur (AP1) d'une force FL exercée sur le premier bras tendeur (30) par l'élément de sollicitation de tendeur (41), et
hF2 = le bras de levier par rapport au second axe de pivot de bras tendeur (AP2) de la force FL exercée sur le second bras tendeur (32) par l'élément de sollicitation de tendeur (41).

**6.** Agencement d'entraînement sans fin tel que revendiqué selon la revendication 5, dans lequel l'unité moteur/générateur (MGU) est configurée pour appliquer un couple d'unité d'entraînement secondaire à l'élément d'entraînement sans fin (20) dans un sens qui est opposé à un couple de vilebrequin qui est appliqué à l'élément d'entraînement sans fin.

**7.** Agencement d'entraînement sans fin tel que revendiqué selon l'une des revendications 5 ou 6, dans lequel la première poulie de tendeur (26) est située sur un premier côté du premier axe de pivot de bras tendeur (AP1), et l'élément de sollicitation de tendeur (41) est positionné pour appliquer la force de sollicitation de tendeur sur un second côté du premier axe de pivot de bras tendeur (AP1), et dans lequel la seconde poulie de tendeur (28) est située sur un premier côté du second axe de pivot de bras tendeur (AP2), et l'élément de sollicitation de tendeur (41) est positionné pour appliquer la force de sollicitation de tendeur sur un second côté du second axe de pivot de bras tendeur (AP2).

**8.** Agencement d'entraînement sans fin tel que revendiqué selon l'une des revendications 5 à 7, dans lequel le tendeur (25), incluant

une base (48) ;
dans lequel le premier bras tendeur (20) est monté de manière pivotante à la base (48) et est sollicité dans un premier sens de bras libre ; et
dans lequel le second bras tendeur (32) est monté de manière pivotante à la base (48) et une seconde position de butée de charge et est sollicité dans un second sens de bras libre,
dans lequel lorsqu'une tension dans l'élément d'entraînement sans fin (20) se situe entre zéro et une tension à la limite d'élasticité pour l'élément d'entraînement sans fin (20), la première et la seconde poulie de tendeur (26, 28) peuvent être déplacées le long d'un premier trajet et d'un second trajet respectivement, dans lequel le premier trajet et le second trajet sont entièrement espacés l'un de l'autre.

9. Agencement d'entraînement sans fin tel que revendiqué selon l'une des revendications précédentes 1 à 4 comprenant en outre :

une base (48), dans lequel la base est d'une manière générale en forme de C et est configurée pour être montée sur un logement d'un accessoire qui peut être entraîné par l'élément d'entraînement sans fin (20) ;

dans lequel le premier bras tendeur (30) est monté de manière pivotante à la base (48) et est sollicité pour le mouvement dans le premier sens de bras libre ; et

dans lequel le second bras tendeur (32) est monté de manière pivotante à la base (48) pour le mouvement le long d'un second trajet et est sollicité pour le mouvement dans le second sens de bras libre.

**FIG. 1**

**FIG. 2**

**FIG. 3**

**FIG. 4**

**FIG. 5**

FIG. 6

FIG. 7

FIG. 8a

FIG. 8b

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004059192 A1
- US 2004043854 A1
- DE 19849659 A1
- WO 2014100894 A1
- US 2003109342 A1
- US 2954726 A